# EUROPEAN PATENT APPLICATION

(11) **EP 0 699 800 A2**
(43) Date of publication of application: **06.03.1996**
(21) Application number: 95108655.2
(22) Date of filing: 06.06.1995
(51) Int. Cl.: D21H 19/28

(54) **Hot melt coatings for paper and paperboard**

(30) Priority: 31.08.1994 US 299137
(71) Applicant: National Starch and Chemical Investment Holding Corporation, Wilmington, Delaware 19809 (US)
(72) Inventor: Kauffman, Thomas F., Easton, Pennsylvania 18042 (US); Hatfield, Stephen F., Raritan, New Jersey 08869 (US); Sharak, Matthew L., Franklin Park, New Jersey 08823 (US)
(74) Representative: Hagemann, Heinrich, Dr. rer. nat., Dipl.-Chem.

(57) **Abstract**

A process for coating paper comprising applying to the paper a molten 100% solids paper coating composition, the composition comprising 20 to 98% by weight of a polylactide homo- or copolymer containing at least 20 molar percent of the lactide component; 2 to 80% by weight of a polar tackifier having a Ring and Ball softening point (as described by ASTM E-26) greater than about 60°C; 0 to 50% by weight of a plasticizer; 0 to 30% by weight of a wax diluent and 0 to 3% by weight of a stabilizer.

## Description

Paper coatings are used for a variety of industrial applications. Thus, emulsion or solvent based paper coatings are used in various internal and external sizing applications in order to impart strength, water resistance and other property enhancements. Recently hot melt paper coatings have been developed to impart improved moisture resistance for certain applications. One major advantage of hot melt systems is the lack of a carrier fluid which eliminates the need for drying the coating film once it is applied to the substrate.

An area where emulsion or solvent based paper coatings have been traditionally used and wherein hot applied coatings may find particular use is in such difficult applications as are encountered in coatings for tampon or vaginal medicinal applicators where properties such as lubricity and moisture vapor transmission resistance are desirable. Related properties with respect to water and moisture vapor transmission resistance are required in many applications where contact with food will be encountered such as in coating of paper plates, food trays and multi-wall bags.

Hot melt adhesive compositions have been proposed to be based on a class of naturally occurring or synthetically produced thermoplastic, biodegradable copolymers derived from poly-lactide, a non-petroleum feedstock as the base polymer. Such compositions advance the state of the art by alleviating the dependence on petroleum based materials and by allowing for the development of paper and paperboard coatings which either degrade naturally after coming in contact with the soil or which can be composted.

It has now been found that hot applied paper coating compositions suitable for a variety of applications may also be prepared from polylactide (i.e., the bimolecular cyclic ester of lactic acid) or copolymers thereof with other lactones such as glycolide and caprolactone formulated with tackifiers, and optionally, waxes and/or plasticizers. The coatings are surprisingly characterized by high moisture vapor transmission resistance, high gloss and excellent blocking resistance. In addition, the coatings can be prepared over a wide range of viscosities making them particularly suitable for application using conventional coating equipment. They are also light in color and, as such, are used in disposable sanitary products where color in the coating may be a serious detriment.

In its broadest aspect, the present invention is directed to hot applied paper coating compositions and to selected products coated therewith. The coating composition comprises 20 to 98% by weight of a polylactide homo- or copolymer where the copolymer contains at least 20 molar percent of the lactide component (l or d or d,l or meso or mixtures thereof) 5 to 50% by weight of a polar tackifier having a Ring and Ball softening point (as described by ASTM E-26) greater than about 60°C; 5 to 50% by weight of a wax diluent; 0 to 50% by weight of a plasticizer; and 0 to 3% by weight of a stabilizer.

Additionally, polymers other than the polylactide may be incorporated into the hot melt adhesives at levels less than about 20% by weight. Representative formulations and applications are discussed hereinbelow and illustrated by the examples, however, these should not be construed as limiting the invention.

The major component of the coating used in the invention, present in an amount of 20 to 98%, preferably at least 30%, by weight of the adhesive, comprises a homo- or copolymer of polylactide containing at least 20 molar percent of the lactide comonomer. The general structure of the polylactide is shown below: 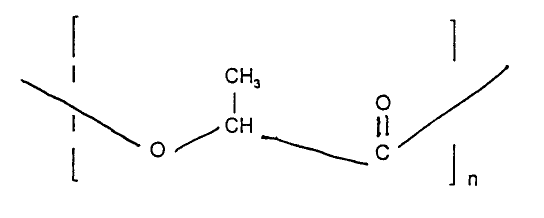
Suitable polymers for use herein have a number average molecular weight (Mₙ) within the range of 10,000 to 200,000.

Since the poly(l-lactide) and poly(d-lactide) homopolymers are crystalline in nature and have a relatively high melting point (i.e., about 186°C depending on its molecular weight and stereopurity) and therefore will provide a coating which is non-blocking and heat resistant, these homopolymers are preferred over the d,l copolymers. The polymers may be prepared by ring-opening polymerization of the bimolecular cyclic ester of lactic acid with acid or base catalysts such as PbO, SnCl₂, SnCl₄, ZnCl₂, SbF₅, Sb₂O₃, or triethylamine using solution, precipitation or melt processes. Alternatively, they may be obtained commercially from Henley Chemicals, Inc. under the Resomer® tradename; from Poly Sciences Inc. or from Ecological Chemical Products Company (EcoChem).

In addition to homopolymers of poly(l-lactide), poly (d-lactide), poly(d,l-lactide), and poly(meso-lactide) suitable polymers for use herein may also be prepared by copolymerization with other lactones such as glycolide or caprolactone. Thus, poly(d,l-lactide-co-glycolide) polymers containing equimolar amounts of the lactide and glycolide components are available from Henley Chemicals as Resomer RG502, 503, 504, 505 and 506 and are suitable for use herein. Poly(d,l-lactide-co-glycolide) polymers known as Resomer RG752, 755 and 756 containing 75% of the lactide component as well as the Resomer 858 polymer which contains 85% lactide are also suitable.

The tackifying resins useful in the coating compositions are generally polar in nature and have a Ring and Ball softening point greater than 60°C and include rosin and rosin derivatives, terpene phenolics, pure phenolic resins, and the like. More particularly, the useful tackifying resins include any compatible resins or mixtures thereof such as (1) natural and modified rosins such, for example, as gum rosin, wood rosin, tall oil rosin, distilled rosin, hydrogenated rosin, dimerized rosin, and polymerized rosin; (2) glycerol and pentaerythritol esters of natural and modified rosins, such, for example as the glycerol ester of pale, wood rosin, the glycerol ester of hydrogenated rosin, the glycerol ester of polymerized rosin, the pentaerythritol ester of hydrogenated rosin, and the phenolic-modified pentaerythritol ester of rosin; (3) phenolic modified terpene resins and hydrogenated derivatives thereof such, for example, as the resin product resulting from the condensation, in an acidic medium, of a bicyclic terpene and a phenol; (4) thermoplastic alkyl phenolic resins such as those described in U.S. Patent No. 4,073,776. Mixtures of two or more of the above described tackifying resins, as well as blends of the above resins with small amounts of (e.g., less than about 10% of the adhesive) less compatible resins may be utilized for some formulations. While the tackifier may comprise up to about 80% of the adhesive, it is generally used in amounts of 5 to 50%, preferably 10 to 30%, by weight. The use of these tackifiers in the coating compositions lowers the cost of the composition since it serves as a diluent for the more expensive lactide polymers. Moreover, the presence of the tackifiers in the coating compositions promotes good machining properties when the compositions are hot applied while providing non-tacky surfaces at room temperature. As such, the tackifiers improve the hot adhesion to the paper surfaces without affecting the desireable end use properties.

Wax diluents are used in amounts of 5 to 50%, preferably 10 to 30%, by weight, in order to soften and/or reduce the melt viscosity or cohesive characteristics of the hot melt compositions without appreciably decreasing their adhesive bonding characteristics. Suitable waxes include 12-hydroxystearamide wax, hydrogenated castor oil, oxidized synthetic waxes, poly(ethylene oxide) having a weight average molecular weight above about 1000 and functionalized synthetic waxes such as carbonyl containing Escomer H101 from Exxon.

Depending on the end-use application, various compatible plasticizing or extending oils may also be present in the composition in amounts up to about 50% by weight. Preferred compatible plasticizers include phthalate plasticizers such as dioctyl phthalate; liquid polyesters such as Dynacol 720 from Huls; benzoate plasticizers such as l,4-cyclohexane dimethanol dibenzoate (e.g., Benzoflex 352 available commercially from Velsicol); a blend of triethyltetrate and triacetin (e.g., Citroflex available commercially from Morflex); phosphate plasticizer such as t-butylphenyl diphenyl phosphate (e.g., Santicizer 154 available commercially from Monsanto); poly(ethylene glycols) and derivatives thereof such as the phenyl ether of poly(ethylene glycol) (e.g., Pycal 94 available commercially from ICI) as well as liquid rosin derivatives having Ring and Ball melting points below about 60°C such as the methyl ester of hydrogenated rosin (e.g., Hercolyn D from Hercules); as well as vegetable and animal oils such as glyceryl esters of fatty acids and polymerization products thereof.

Among the applicable stabilizers or antioxidants which may be included herein are high molecular weight hindered phenols and multifunctional phenols such as sulfur and phosphorous-containing phenols. Representative hindered phenols include: 1,3,5-trimethyl-2,4,6-tris(3,5-di-tert-butyl-4-hydroxybenzyl)benzene; pentaerythritol tetrakis-3-(3,5-di-tert-butyl-4-hydroxyphenyl)propionate; n-octadecyl 3,5-di-tert-butyl-4-hydroxyphenyl) propionate; 4,4'-methylenebis (2,6-di-tert-butylphenol); 4,4'-thiobis (6-tert-butyl-o-cresol); 2,6-di-tert-butylphenol; 6-(4-hydroxyphenoxy)-2,4-bis(n-octylthio)-1,3,5-triazine; di-n-octadecyl-3,5-di-tert-butyl-4-hydroxy-benzylphosphonate; 2-(n-octylthio)-ethyl 3,5-di-tert-butyl-4-hydroxybenzoate; and sorbitol hexa[3-(3,5-di-tert-butyl-4-hydroxyphenyl)propionate]. If used, the stabilizer is present in levels of about 0.1 to 3% by weight.

Optional additives may be incorporated into the hot melt compositions in order to modify certain properties thereof. Among these additives may be included colorants such as titanium dioxide; and fillers such as talc and clay, etc. There may also be present in the coating compositions in small amounts (e.g., less than about 20% by weight, and preferably 5 to 20% by weight) of certain thermoplastic polymers such as ethylene vinyl acetate, ethylene acrylic acid, ethylene methyl acrylate and ethylene n-butyl acrylate copolymers containing about 12 to 50% vinyl acetate as well as caprolactone polymers. These polymers are employed in order to impart flexibility, toughness and strength. Alternatively and in particular, it may be desirable to incorporate into the hot applied coatings up to 20% by weight of certain degradeable polymers such as poly(vinyl alcohol), hydroxyethyl cellulose, starch, modified starch, polycaprolactone polymers (e.g., the Tone polymers available from Union Carbide), or poly(hydroxy butyrate/hydroxy valerate).

These hot compositions may be formulated using techniques known in the art. An exemplary procedure involves placing approximately 40% of the total tackifying resin concentration with all the polymer, wax, plasticizers and stabilizers in a jacketed mixing kettle, preferably in a jacketed heavy duty mixer, which is equipped with rotors and thereupon raising the temperature to a range of from up to about 190°C. After the resin has melted, the temperature is lowered to 150 to 165°C. Mixing and heating are continued until a smooth, homogeneous mass is obtained whereupon the remainder of the tackifying resin is thoroughly and uniformly admixed therewith.

As noted above, the hot applied paper coatings may be used in a variety of end use applications wherein particular stringent water vapor transmission resistant requirements are encountered. The coatings therefore find special application as coatings for tampons and vaginal medicine applicators as well as in the coating of paper plates, food trays and multi-wall bags.

The coatings are applied in the molten form at 100% solids using conventional techniques. The particular method of application will depend to a large extent on the viscosity of the coating composition. Thus, the high viscosity materials are applied by extrusion or slotter coating techniques while the lower viscosity coatings may be applied by spraying. Depending on the ultimate end use, coating weights of 5 to 50 grams per square meter are utilized. For coating onto light weight paper board such as is commonly used for tampon applicators, coating thicknesses of about 0.5 to 2 mil are preferred.

In the following illustrative examples all parts are given by weight and all temperatures in degrees Celsius unless otherwise noted.

### EXAMPLE I

In preparing the following samples, a heavy duty mixer which had been heated to 190°C and which was equipped with a stirring paddle was charged with 40% of the tackifying resin, and/or diluent. After melting of the resins, stirring was then initiated whereupon the polylactide was added slowly at 190°C over a one-half hour period after which the temperature was lowered to 170°C. Heating and stirring were continued until a homogeneous mass was obtained whereupon the remainder of the tackifying resin and/or diluent was admixed therewith.

Viscosity measurements were determined after 30 minutes using a Brookfield viscometer (Spindle 27) at 300 or 315°F as indicated. Density measurements were made in water using conventional specific gravity techniques.

The compositions and physical properties are shown in Table I.

**TABLE I**

| MATERIALS | A | B | C | D | E | F | G |
|---|---|---|---|---|---|---|---|
| Polylactide HC | 50 | 50 | 50 | 50 | -- | -- | -- |
| Polylactide 941110105 | | | | -- | 45 | 45 | 45 |
| Pycal 94 | 30 | -- | -- | -- | -- | -- | -- |
| Foral AX | 20 | -- | -- | -- | -- | -- | -- |
| Benzoflex S-45 | -- | -- | 30 | 20 | -- | -- | -- |
| Nirez 300 | -- | 20 | 20 | 20 | 20 | 25 | 20 |
| Kemamide S | -- | 30 | -- | -- | 10 | 10 | 10 |
| Kemamide S Pellets | -- | -- | -- | 10 | -- | -- | -- |
| Santicizer 160 | -- | -- | -- | -- | 25 | 20 | -- |
| Citroflex | -- | -- | -- | -- | -- | -- | 25 |
| Irganox 1010 | -- | -- | -- | -- | 0.5 | 0.5 | 0.5 |
| Viscosity (315°F) | -- | -- | 20,000 | -- | -- | -- | -- |
| Viscosity (300°F) | -- | -- | -- | -- | 1045 | 1335 | 970 |
| Ring & Ball Softening Point | -- | -- | 289°F | -- | 274°F | 274°F | 274°F |
| Density | -- | -- | 1.17 | | | | |
| Polylactide HC is a polylactide homopolymer (2-hydroxy-propanoic acid) available from Ecochem Polylactide 941110105 is the lot number for a polylactide homopolymer available from Ecochem Pycal 94 is a phenyl ether of polyethylene glycol from ICI Foral AX is a hydrogenated rosin from Hercules Benzoflex S-45 is a diethyl glycol dibenzoate from Velsicol Nirez 300 is a terpene phenolic resin from Arizona Chemical Kenamide S is a stearamide wax from Witco Citroflex is triethylcitrate from Morflex Santicizer 160 is butyl benzyl phthalate from Monsanto | | | | | | | |

The materials prepared above were coated onto light weight paper board at a coating weight of 1 to 1.5 mil. The coatings represented by Samples A, B, C and D were relatively viscous materials which could be applied by conventional extrusion and slotter coating techniques. The coatings designated Samples E, F and G were less viscous and were applied by spraying. In all cases, the coatings were smooth, light in color, non-blocking, water resistant and biodegradeable, properties which make them ideally suited for use in tampon and vaginal medicinal applicators as well as in coatings for paper products that would come into contact with food such as paper plates or trays and multi-wall bags.

## Claims

1. A coated paper product selected from the group consisting of tampon applicators, vaginal medicinal applicators, paper plates, paper trays and multi-wall paper bags, the exterior portion thereof having been coated with a molten 100% solids paper coating composition, the coating composition comprising 20 to 98% by weight of a polylactide homo- or copolymer containing at least 20 molar percent of the lactide component; 2 to 80% by weight of a polar tackifier having a Ring and Ball softening point (as described by ASTM E-26) greater than about 60°C; 0 to 50% by weight of a plasticizer; 0 to 30% by weight of a wax diluent and 0 to 3% by weight of a stabilizer.

2. The coated paper product of Claim 1 wherein the polylactide polymer in the paper coating is poly(d,l-lactide) homopolymer.

3. The coated paper product of Claim 1 wherein the hot applied paper coating composition comprises 20 to 70% by weight of a polylactide homo- or copolymer containing at least 20 molar percent of the lactide component, 10 to 60% of a tackifying resin, 0 to 3% of a stabilizer and 10 to 50% plasticizer.

4. The coated paper product of Claim 1 wherein the polylactide in the hot applied paper coating has a number average molecular weight within the range of 10,000 to 20,000.

5. The coated paper product of Claim 1 wherein the tackifying resin in the hot applied paper coating is selected from the group consiting of (1) natural and modified rosins; (2) glycerol and pentaerythritol esters of natural and modified rosins; (3) phenolic modified terpene resins and hydrogenated derivatives thereof; (4) thermoplastic alkyl phenolic resins; and mixtures thereof.

6. The coated paper product of Claim 1 wherein the plasticizer in the hot applied paper coating is selected from the group consisting of phthalate plasticizers; liquid polyesters; benzoate plasticizers; phosphate plasticizers; poly(ethylene glycols) and derivatives thereof; and liquid rosin derivatives having Ring and Ball melting points below about 60°C.

7. The coated paper product of Claim 1 wherein the wax in the hot applied paper coating is selected from the group consisting of hydroxy stearamide wax, hydrogenated castor oil, oxidized synthetic waxes, poly(ethylene oxide) having a weight average including weight above about 1000 and functionalized synthetic waxes.
